Europäisches Patentamt

European Patent Office

Office européen des brevets

(19)

(11) Numéro de publication : **0 019 566**
**B1**

## FASCICULE DE BREVET EUROPÉEN

(12)

(45) Date de publication du fascicule du brevet :
28.04.82

(51) Int. Cl.³ : **D 01 F   6/54, C 08 L 33/20,**
**C 08 L   1/02, C 08 B   1/00**

(21) Numéro de dépôt : **80420058.2**

(22) Date de dépôt : **12.05.80**

(54) Solutions conformables, articles en forme obtenus à partir de ces solutions ainsi que leur procédé d'obtention.

(30) Priorité : **14.05.79 FR 7912383**
**13.03.80 FR 8005963**

(43) Date de publication de la demande :
**26.11.80 (Bulletin 80/24)**

(45) Mention de la délivrance du brevet :
**28.04.82 Bulletin 82/17**

(84) Etats contractants désignés :
**AT BE CH DE GB IT LI NL SE**

(56) Documents cités : **Néant**

(73) Titulaire : **RHONE-POULENC-TEXTILE**
**22, Avenue Montaigne**
**F-75008 Paris (FR)**

(72) Inventeur : **Menault, Jacques**
**5, Avenue Louis Momet**
**F-69260 Charbonnières-Les-Bains (FR)**
Inventeur : **Rodier, Henry**
**8, Boulevard de l'Europe**
**F-69110 Sainte-Foy-Les-Lyon (FR)**

(74) Mandataire : **Prud'Homme, Simone et al**
**RHONE-POULENC-TEXTILE Direction Techni-**
**que-Brevets BP 82-41**
**F-69355 Lyon Cedex 2 (FR)**

Imprimerie Jouve, 18, rue St-Denis, 75001 Paris, France

**0 019 566**

Solutions conformables, articles en forme obtenus à partir de ces solutions ainsi que leur procédé d'obtention.

La présente invention concerne de nouvelles solutions conformables capables d'être mises sous forme de fils, fibres, films, membranes, pellicules, etc... ainsi qu'un procédé pour leur obtention. Elle concerne également les fils et fibres obtenus à partir de ces solutions ainsi que le procédé d'obtention desdits fils et fibres.

Plus particulièrement la présente invention concerne des solutions conformables contenant de la cellulose et un polymère acrylique, leur procédé d'obtention ainsi que les articles en forme obtenus à partir de telles solutions.

Il est connu selon le brevet d'Allemagne Démocratique n° 94 493 de préparer des solutions filables et filmables par dissolution de la cellulose et d'un autre polymère tel que le polyacrylonitrile dans des solutions aqueuses de chlorure de zinc de concentration 30-70 % en chlorure de zinc et éventuellement d'une faible quantité d'un acide, tel que l'acide formique, phosphorique, chlorhydrique etc... ; mais ces solutions utilisant le chlorure de zinc provoquent une hydrolyse donc une dégradation de la cellulose.

Il est également connu selon la demande japonaise 71 27573, publiée le 10.08.71, de préparer des solutions ou dispersions de mélanges de cellulose et de polymères tels que les copolymères d'acrylonitrile dans de l'anhydride sulfureux en présence d'une amine tertiaire ou secondaire.

Mais de telles solutions, à cause des composés utilisés, nécessitent l'utilisation de précautions particulières en ce qui concerne l'hygiène et la sécurité ; elles peuvent difficilement être utilisées dans des procédés industriels.

L'article de Raymond B. Seymour et Earl J. Johnson dans « Struct. Solubility Relat. Polym. (Proc. Symp.) 1976, p. 241-4, (publ. 1977) », décrit la possibilité d'obtenir des fibres contenant du polyacrylonitrile et de la cellulose. Mais les solutions de cellulose de départ, de concentration inférieure à 2,5 % ne permettent pas d'obtenir des fibres de propriétés textiles intéressantes et ne peuvent pas conduire à une réalisation industrielle.

Enfin, le brevet d'Allemagne Démocratique 89 003 prévoit l'obtention de dispersions stables par introduction de cellulose microcristalline dans une solution d'un autre polymère. Mais la cellulose ainsi introduite reste, également, au stade des fibres, dans un état particulaire sans contribuer à donner aux fibres des propriétés textiles.

Il a maintenant été trouvé des solutions facilement conformables constituées de :
— cellulose de degré de polymérisation au moins 200
— polymère à base d'acrylonitrile
— diméthylsulfoxyde
— formaldéhyde

dans lesquelles le rapport pondéral cellulose/polymère acrylique est compris entre 0,05 et 1, le rapport pondéral formaldéhyde/cellulose est compris entre 0,2 et 2, la concentration totale en polymères des solutions est comprise entre 12 et 30 % en poids.

Pour l'obtention de fils et fibres, on préfère généralement utiliser des solutions de concentration en polymères comprise entre 18 et 26 % en poids, de teneur en eau inférieure ou égale à 5 000 ppm, et comportant un rapport pondéral cellulose/polymère acrylique compris entre 0,1 et 1.

L'invention concerne également un procédé d'obtention des solutions conformables selon la présente invention par addition du polymère acrylique sous forme de poudre à une solution dans un mélange de diméthylsulfoxyde (DMSO) et formaldéhyde, de cellulose de degré de polymérisation au moins 200, préalablement séchée, la concentration totale en polymères étant comprise entre 12 et 30 % et le rapport pondéral cellulose/polymère acrylique entre 0,05 et 1, la solution de cellulose pouvant se présenter sous forme de poudre cristallisée au préalable par refroidissement, à température inférieure à 17 °C, de préférence comprise entre 0 et 5 °C, les deux poudres étant alors mélangées, par exemple dans une boudineuse malaxeuse, à une température comprise entre 90 et 150 °C, de préférence entre 100 et 135 °C.

On peut également obtenir les solutions selon la présente invention par dissolution séparée du polymère acrylique dans du diméthylsulfoxyde et de la cellulose dans le mélange diméthylsulfoxyde et formaldéhyde et mélange des deux solutions sous agitation, le rapport pondéral cellulose/polymère acrylique étant compris entre 0,05 et 1. Ce dernier procédé est généralement préféré pour des concentrations totales en polymères comprises entre 12 et 18 %.

La présente invention concerne des filaments, fibres, fils à base de cellulose et polymère acrylique dans un rapport pondéral cellulose/polymère acrylique compris entre 0,05 et 1, dans lesquels chaque polymère se présente sous forme de fibrilles sensiblement orientées suivant l'axe de la fibre étroitement entrecroisées entre elles, les macromolécules de cellulose sont partiellement engagées dans un réseau cristallin tridimensionnel caractéristique de la cellulose II et les fibrilles du constituant acrylique forment un réseau tridimensionnel continu tout au long de la fibre.

De préférence, le rapport pondéral cellulose/polymère acrylique est compris entre 0,1 et 1 et les fibrilles de cellulose forment également un réseau fibrillaire tridimensionnel continu ; ce réseau est d'autant plus dense que la proportion en cellulose est plus élevée, les fibrilles des deux constituants étant intimement entremêlées.

2

Les fils et fibres selon l'invention présentent en outre un pouvoir de rétention d'eau déterminé selon la norme DIN 53 814 d'au moins 20, de préférence au moins 30.

La présente invention concerne enfin un procédé d'obtention desdits fils et fibres, par filage à l'humide des solutions selon l'invention dans lesquelles la concentration totale en polymères est comprise entre 12 et 30 % dans un bain coagulant constitué de 25 à 80 % d'eau et 75 à 20 % en volume de diméthylsulfoxyde, ledit bain étant maintenu entre 0 et 40 °C, orientation des filaments et élimination du solvant.

Pour la préparation des solutions selon l'invention, on peut utiliser de la cellulose I, dite native, de toute provenance, par exemple des linters de coton, de la pâte de bois, ou de la cellulose II, possédant un degré de polymérisation d'au moins 200, provenant par exemple de déchets de fibres ou films de cellulose régénérée ou d'alcali-cellulose, neutralisée et lavée.

Par polymère à base d'acrylonitrile ou polymère acrylique, on entend les polymères contenant au moins 50 % d'acrylonitrile, de préférence au moins 85 % d'acrylonitrile et jusqu'à 50 % et de préférence jusqu'à 15 % d'unités issues d'un ou plusieurs monomères éthyléniques copolymérisables avec l'acrylonitrile tels que les composés vinyliques, chlorure et acétate de vinyle par exemple, acides, esters et amides acryliques ou méthacryliques, le méthacrylonitrile, les composés à fonction acide carboxylique tel que l'acide itaconique ou à fonction acide sulfonique tel que les composés vinyl sulfoniques, les acides allyl- et méthallyl-sulfonique, les dérivés aromatiques sulfonés, les acides styrène sulfonique, vinyloxyarène sulfoniques, les dérivés vinyliques de type basique tels que vinyl-pyridine et ses dérivés alcoylés, oxydes de vinyle et de dialcoylamine, etc...

La présente invention s'applique aussi aux mélanges de polymères énumérés ci-dessus, en proportions variables.

La cellulose de départ, de degré de polymérisation au moins 200, est déchiquetée, séchée si nécessaire puis on effectue un prégonflement de cette dernière dans le DMSO, éventuellement séché au préalable. Après quoi, le formaldéhyde sous forme de paraformaldéhyde est ajouté et la température élevée jusqu'à une température comprise de préférence entre 90 et 140 °C selon le procédé décrit dans la demande française 2 358 435 de la demanderesse publiée le 10.02.1978.

Le rapport pondéral formaldéhyde/cellulose dépend en grande partie de la cellulose utilisée. Il est en général préférable d'utiliser un rapport formaldéhyde/cellulose d'autant plus élevé que la cellulose employée présente une accessibilité moins grande. En pratique, il est préférable pour dissoudre la cellulose I d'utiliser un rapport formaldéhyde/cellulose d'au moins 1, tandis que pour la cellulose II, on peut utiliser un rapport d'au moins 0,6 au stade de la dissolution.

Pour faciliter la transformation ultérieure, ce rapport peut ensuite être éventuellement diminué à une valeur comprise entre 0,2 et 2 par élimination du formaldéhyde, par tout moyen connu, tel que l'entraînement par un gaz anhydre de préférence inerte, ou la distillation sous pression réduite, sans risque de formation de gel ou de coagulation, à condition toutefois que le rapport formaldéhyde/cellulose reste au moins égal à 0,2.

De préférence, le formaldéhyde utilisé dans la présente invention est sous forme de paraformaldéhyde.

Il est souhaitable également que la teneur en eau des différents réactifs soit faible ; par exemple que la teneur en eau de la cellulose soit inférieure à 1 %, celle du diméthylsulfoxyde inférieure ou égale à 1 % et celle du paraformaldéhyde inférieure à 4 % en poids.

La solution de polymère acrylique dans le diméthylsulfoxyde peut être effectuée à froid ou à chaud selon les cas, sous simple agitation et les deux solutions sont mélangées sous agitation, le rapport pondéral cellulose/polymère acrylique étant compris entre 0,05 et 1.

Ce processus est utilisé de préférence lorsque la concentration en polymère n'est pas trop élevée, généralement de 12 à 18 % en poids environ.

Pour l'obtention de solutions comportant une plus forte concentration en polymère (jusqu'à 30 %), ou dans le cas de solutions de cellulose de viscosité élevée (degré de polymérisation et/ou concentration élevée), on préfère généralement ajouter directement le polymère acrylique sous forme de poudre soit à la solution de cellulose telle que préparée ci-dessus, soit après avoir cristallisé celle-ci par refroidissement à température inférieure à 17 °C, de préférence comprise entre 0 et 5 °C et l'avoir transformée en poudre. Les deux poudres sont ensuite mélangées par exemple dans une boudineuse malaxeuse à une température comprise entre 90 et 150 °C.

Les solutions selon l'invention peuvent être utilisées pour l'obtention d'articles très divers tels que fils, fibres, films, feuilles, pellicules, etc.

Pour améliorer certaines propriétés des articles obtenus, elles peuvent être modifiées avant leur mise en forme au moyen d'une faible proportion d'un adjuvant connu tel que colorant, pigment, ignifugeant pouvant être par exemple un composé phosphoré et/ou soufré polymérisé, etc...

Les solutions qui conviennent pour le filage sont celles de concentration totale en polymères comprise entre 12 et 30 %, dont le rapport cellulose/polymère acrylique est compris entre 0,05 et 1 et de teneur en eau inférieure à 5 000 ppm. Toutefois, pour la réalisation d'un filage industriel rentable et l'obtention de fibres de bonnes caractéristiques, cette concentration en polymère sera d'au moins 18 %, de préférence comprise entre 18 et 26 %, et le rapport cellulose/polymère acrylique compris entre 0,1 et 1.

Lesdites solutions peuvent être filées à sec selon tout procédé connu de l'homme de l'art, par exemple selon la demande de brevet n° 2 372 251 publiée le 23.06.78. De préférence, elles sont filées dans un bain coagulant constitué essentiellement d'eau et de diméthylsulfoxyde en proportions respectives comprises entre 25/75 et 80/20 en volume, le bain étant maintenu à une température comprise entre 0 et 40 °C. Les filaments subissent une orientation moléculaire qui peut être effectuée dans le bain coagulant ou ultérieurement par étirage en une ou plusieurs fois, par exemple dans l'air, dans un bain aqueux ou dans les deux successivement.

Après leur sortie du bain coagulant, les filaments sont débarrassés du solvant par lavage à l'eau avant, pendant ou après étirage. Le lavage peut également être effectué au moyen de solutions diluées d'ammoniaque pour éviter le collage des brins. Ensuite, les filaments peuvent être avantageusement lavés à l'eau, puis ensimés et séchés.

Les fils et fibres selon la présente invention comprennent, pour le rapport cellulose/polymère acrylique compris entre 0,05 et 0,1 environ, un réseau tridimensionnel continu constitué d'un polymère acrylique dont les fibrilles sensiblement orientées dans le sens de l'axe de la fibre sont étroitement entremêlées avec des fibrilles de cellulose qui sont sensiblement orientées dans l'axe de la fibre mais restent discontinues. Pour un rapport cellulose/polymère acrylique compris entre 0,1 et 1, les fibrilles de cellulose se densifient pour former également un réseau tridimensionnel continu, les macromolécules de la cellulose étant, dans tous les cas, partiellement engagées dans un réseau cristallin tridimensionnel caractéristique de la cellulose II.

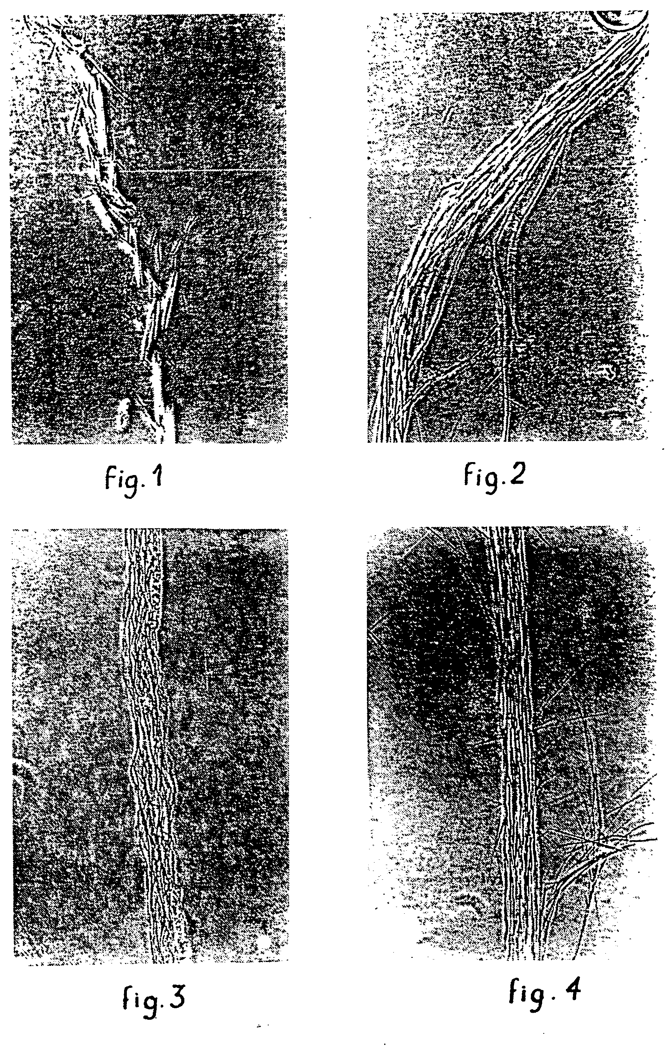

Les figures 1 à 5 permettent de mieux comprendre la structure des fibres selon l'invention.

Les figures 1 à 4 représentent (avec un grossissement 200 X) le réseau fibrillaire cellulosique seul obtenu après dissolution du constituant acrylique, dans des fibres obtenues à partir de solutions de proportions cellulose/polymère acrylique croissantes :

Figure 1 : rapport cellulose/polymère acrylique   0,05
Figure 2 : rapport cellulose/polymère acrylique   0,1
Figure 3 : rapport cellulose/polymère acrylique   0,2
Figure 4 : rapport cellulose/polymère acrylique   0,4

La figure 5 représente (avec un grossissement de 6 000 X) une vue en coupe du fil complet, c'est-à-dire comportant les deux réseaux fibrillaires et correspondant au fil de la figure 4.

Les fils et fibres ainsi obtenus possèdent à la fois de bonnes propriétés mécaniques, un bon pouvoir absorbant, une bonne affinité tinctoriale et une excellente antistaticité.

Le pouvoir de rétention d'eau desdits fils et fibres est déterminé selon la norme DIN 53-814. Il est d'au moins 20 de préférence au moins 30. En général, il est compris entre 20 et 80, plus particulièrement entre 30 et 80 alors que celui des fibres acryliques exemptes de cellulose est de l'ordre de 5-6. Cette caractéristique donne aux fibres un grand confort au porter en absorbant rapidement l'humidité corporelle qui peut ensuite s'évaporer de la surface du textile.

Il est également possible d'obtenir, à partir de solutions selon l'invention, des films, feuilles, pellicules, etc... selon tout procédé connu.

Les exemples qui suivent dans lesquels les parties et pourcentages, sauf indication contraire, s'entendent en poids sont donnés à titre indicatif mais non limitatif pour illustrer l'invention.

Exemple 1

106 g de pâte de bois papetière « kraft » blanchie, de degré de polymérisation 1 050, contenant 6 % d'humidité, sont complètement séchés à l'étuve. Ils sont ensuite introduits dans 1 467 g de diméthylsulfoxyde contenant 230 ppm d'eau. On ajoute 124,8 g de paraformaldéhyde à 96 %. Le rapport formaldéhyde/cellulose est de 1,2.

On chauffe le mélange sous agitation pendant 6 heures à 135 °C puis on élimine une partie du formaldéhyde par passage en continu dans un évaporateur à couche mince, sous vide, jusqu'à obtenir un rapport formaldéhyde/cellulose de 0,40. On obtient une solution de viscosité 2 200 poises à 20 °C.

Après refroidissement à 85 °C, on ajoute une solution d'un copolymère constitué de 91,4 % en poids d'acrylonitrile, 7,75 % de méthacrylate de méthyle et 0,85 % de méthallyl sulfonate de sodium, de concentration 23 % dans le diméthylsulfoxyde de façon à obtenir un rapport cellulose/polymère acrylique de 0,05. On malaxe le mélange des deux solutions pendant 1 heure à 85 °C. La solution homogène obtenue contenant 20,4 % de polymères est extrudée à travers une filière de 200 orifices de diamètre 0,055 mm chacun, dans un bain coagulant maintenu à 5 °C, constitué de diméthylsulfoxyde et d'eau en proportions respectives 55/45 en volume.

A la sortie du bain coagulant, les fils sont repris puis étirés dans l'air à température ambiante entre deux paires de rouleaux à un taux de 1,3 X, lavés à l'eau sur la seconde paire de rouleaux et étirés de nouveau dans un bain d'eau bouillante de 4,1 X. Après ensimage et séchage, les filaments obtenus possèdent les caractéristiques suivantes :

| | |
|---|---|
| Titre au brin | 1,7 dtex |
| Ténacité | 28 g/tex |
| Allongement | 21 % |
| Pouvoir de rétention d'eau | 22. |

# 0 019 566

## Exemple 2

106 g de pâte au sulfate préhydrolysée, de degré de polymérisation 430, à 6 % d'humidité, sont complètement séchés à l'étuve, puis ils sont mélangés de façon homogène avec 436 g de diméthylsulfoxyde contenant 300 ppm d'eau et 135 g de paraformaldéhyde (rapport paraformaldéhyde/cellulose : 1,3). Le mélange obtenu est porté pendant 8 h à 110 °C puis pendant 7 heures à 135 °C sous agitation.

On élimine ensuite une partie du formaldéhyde comme à l'exemple 1 de manière à obtenir un rapport formaldéhyde/cellulose de 0,47. La solution ainsi obtenue, de viscosité 4 400 poises à 90 °C, est ramenée à une température de 3 °C, mise en poudre, mélangée à froid avec un polymère acrylique sec de composition identique à celle de l'exemple 1, de façon à avoir un rapport cellulose/polymère acrylique de 1. La concentration en polymères du mélange est de 29,3 %. Ce mélange est passé dans une boudineuse dégazeuse à double vis à une température de 130 °C, puis extrudée à travers une filière de 200 trous de 0,055 mm chacun, à 90 °C, dans un bain coagulant maintenu à 5 °C, constitué de diméthylsulfoxyde et d'eau (55/45 en volume).

Les filaments subissent successivement un étirage dans l'air à température ambiante de 1,3 X, un lavage à l'eau à température ambiante et un étirage dans l'eau bouillante à un taux de 4 X. Après ensimage et séchage, les filaments obtenus possèdent les caractéristiques suivantes :

| | |
|---|---|
| Titre au brin | 3,3 dtex |
| Ténacité | 21 g/tex |
| Allongement | 15 % |
| Pouvoir de rétention d'eau | 72. |

## Exemple 3

106 g de pâte au bisulfite, de degré de polymérisation 770, à 6 % d'humidité, sont complètement séchés à l'étuve, puis ils sont introduits dans 885 g de diméthylsulfoxyde à 520 ppm d'eau. On ajoute 125 g de paraformaldéhyde à 96 % pour obtenir un rapport paraformaldéhyde/cellulose de 1,20. On chauffe le mélange pendant 6 heures à 135°C sous agitation ; après dissolution, le rapport paraformaldéhyde/cellulose est ramené à 0,35 de la même manière qu'à l'exemple 1. La solution obtenue a une viscosité de 400 poises à 85 °C.

Après refroidissement, on ajoute à la solution de cellulose 250 g de polymère acrylique identique à celui de l'exemple 1 de façon à obtenir un rapport pondéral cellulose/polymère acrylique de 0,4. On malaxe pendant 1 heure à froid puis on ajoute 200 g de diméthylsulfoxyde et on malaxe de nouveau pendant 1 heure à 85 °C.

La solution homogène obtenue qui présente une concentration totale en polymères de 23,8 % est filée à travers une filière de 200 orifices de 0,055 mm chacun dans un bain coagulant contenant du diméthylsulfoxyde et de l'eau (55/45 en volume) maintenu à 5 °C. Les filaments sortant du bain coagulant sont étirés dans l'air à un taux de 1,07 X lavés à l'eau à température ambiante et étirés dans l'eau bouillante à un taux de 4,1 X. Après ensimage et séchage, les filaments obtenus possèdent les propriétés suivantes :

| | |
|---|---|
| Titre au brin | 3,3 dtex |
| Ténacité | 25 g/tex |
| Allongement | 14 % |
| Pouvoir de rétention d'eau | 48. |

## Exemples 4 à 9

106 g de pâte « kraft » au sulfate préhydrolysée, de degré de polymérisation 500, à 6 % d'humidité, sont complètement séchés à l'étuve puis ils sont introduits dans 1 440 g de diméthylsulfoxyde à 550 ppm d'eau. On ajoute 125 g de paraformaldéhyde à 96 % de manière à obtenir un rapport paraformaldéhyde/cellulose de 1,20.

On chauffe ce mélange pendant 5 heures à 135 °C sous agitation ; après dissolution, on élimine une partie du paraformaldéhyde par barbotage d'un courant d'azote sec à 120 °C et on abaisse le rapport formaldéhyde/cellulose à 0,25.

La solution obtenue, de viscosité 410 poises à 20 °C est refroidie et additionnée de 500 g de polymère acrylique sec identique à celui utilisé dans l'exemple 1 sous forme de poudre de façon à obtenir un rapport cellulose/polymère à base d'acrylonitrile de 0,2. Le mélange est malaxé pendant 1 heure à froid, additionné de 250 g de diméthylsulfoxyde, malaxé pendant 1 heure à 85 °C. La solution à 25,9 % de polymères est extrudée à 75 °C à travers une filière de 200 trous de 0,055 mm dans un bain coagulant à 5 °C constitué d'un mélange de diméthylsulfoxyde et d'eau en proportion 55/45 ; les filaments sont extraits par un organe mécanique entraîné positivement et subissent un étirage dans l'air à un taux de 1,4 X, un lavage à contre-courant et un étirage dans l'eau bouillante à un taux de 4,1 X, un ensimage et un séchage.

5

La vitesse finale est de 60 m/min.

Les propriétés des fils sont données dans le tableau ci-après.

Des solutions identiques sont filées à travers la même filière mais dans des bains coagulants de composition différente et à des températures différentes. Les conditions précises ainsi que les taux d'étirage et les caractéristiques des filaments sont donnés dans ce même tableau.

| Exemples | | 4 | 5 | 6 | 7 | 8 | 9 |
|---|---|---|---|---|---|---|---|
| Bain coagulant | Proportion DMSO/eau | 55/45 | 55/45 | 70/30 | 70/30 | 35/65 | 35/65 |
| | Température °C | 5 | 35 | 5 | 15 | 5 | 35 |
| Taux d'étirage | Etirage air | 1,4 | 1,4 | 1,17 | 1,17 | 1 | 1 |
| | Etirage eau bouillante | 4,1 | 4,1 | 4,9 | 4,9 | 5,5 | 5,5 |
| Vitesse finale m/min | | 60 | 60 | 50 | 50 | 55 | 55 |
| Ténacité g/tex | | 30 | 26 | 31 | 28 | 29 | 27 |
| Allongement % | | 16 | 15 | 16 | 15 | 16 | 16 |
| Pouvoir de rétention d'eau | | 40 | 38 | 41 | 43 | 44 | 40 |

## Exemples 10 à 12

106 g de pâte « kraft » au sulfate préhydrolysée, de degré de polymérisation 500, à 6 % d'humidité, sont complètement séchés à l'étuve puis ils sont introduits dans 1 440 g de diméthylsulfoxyde à 550 ppm d'eau. On ajoute 125 g de paraformaldéhyde à 96 % de manière à obtenir un rapport paraformaldéhyde/cellulose de 1,20. On chauffe pendant 5 heures à 135 °C et après refroidissement on ajoute 500 g de polymère acrylique sec en poudre constitué de 94,15 % en poids d'acrylonitrile, 5 % en poids de méthacrylate de méthyle et 0,85 % en poids de méthallyl sulfonate de sodium, de façon à obtenir un rapport cellulose/polymère acrylique de 0,2. On malaxe pendant 1 heure à froid, on ajoute 250 g de diméthylsulfoxyde et on malaxe de nouveau pendant 1 heure à 85 °C. La solution obtenue à 24,8 % de polymères est extrudée à 75 °C à travers une filière de 200 trous de 0,055 mm de diamètre dans un bain coagulant maintenu à 5 °C, constitué d'un mélange de diméthylsulfoxyde et d'eau en proportion 55/45.

Les filaments sont extraits par un organe mécanique entraîné positivement, et subissent un étirage dans l'air à température ambiante à un taux de 1,05 X, un lavage au cours de l'étirage dans l'air par arrosage avec une solution aqueuse d'ammoniaque à 30 g/l ; ils traversent ensuite un bac intermédiaire contenant une solution aqueuse d'ammoniaque à 30 g/l puis sont de nouveau étirés dans l'eau bouillante à un taux de 4,1 X, lavés, ensimés et séchés.

Les filaments obtenus possèdent les caractéristiques indiquées dans le tableau ci-après.

Deux solutions identiques à la solution décrite ci-dessus sont extrudées dans des bains coagulants dont on a modifié la composition et la température, les filaments étant ensuite traités de la manière ci-dessus. Les conditions de filage et les propriétés des filaments obtenues sont réunies dans le même tableau ci-après :

| Exemples | | 10 | 11 | 12 |
|---|---|---|---|---|
| Bain coagulant | Proportion DMSO/eau | 55/45 | 70/30 | 70/30 |
| | Température °C | 5 | 25 | 35 |
| Taux d'étirage | Etirage air | 1,05 | 1,07 | 1,04 |
| | Etirage eau bouillante | 4,1 | 4,9 | 5,2 |
| Vitesse finale en m/min | | 50 | 50 | 50 |
| Propriétés | Ténacité g/tex | 25 | 25 | 26 |
| | Allongement % | 14 | 13,5 | 15 |
| | Pouvoir de rétention d'eau | 42 | 39 | 40 |

## Exemple 13

On procède de la même manière que selon l'exemple 4 avec une solution de cellulose identique et un homopolymère d'acrylonitrile comme polymère acrylique en proportion identique, mais en ajoutant 935 g de diméthylsulfoxyde au lieu de 250 après malaxage à froid. Les filaments sont ensuite traités de la même manière exceptée la température du bain coagulant qui est de 15 °C. Ils possèdent les propriétés suivantes :

| | |
|---|---|
| Ténacité | 28 g/tex |
| Allongement | 14 % |
| Pouvoir de rétention d'eau | 41. |

## Exemple 14

On opère de manière identique à l'exemple 4 avec la même solution de cellulose en remplaçant le polymère acrylique utilisé par un copolymère de composition suivante :

| | |
|---|---|
| — acrylonitrile | 92,70 parties en poids |
| — acétate de vinyle | 6,60 parties en poids |
| — méthallyl sulfonate de sodium | 0,70 parties en poids |

La solution obtenue est filée dans un bain coagulant contenant un mélange de diméthylsulfoxyde et eau en proportions 35/65 maintenu à 25 °C.

Les filaments sont ensuite traités comme à l'exemple 4 mais le taux d'étirage dans l'air est ramené à 1 X ce qui signifie qu'aucun étirage n'a lieu pendant le passage dans l'air. Celui-ci est suivi d'un lavage à l'eau à température ambiante et d'un étirage dans l'eau bouillante à un taux de 5,5 X, un ensimage et un séchage.

Les filaments obtenus possèdent les caractéristiques suivantes :

| | |
|---|---|
| Ténacité | 28 g/tex |
| Allongement | 15 % |
| Pouvoir de rétention d'eau | 39. |

## Exemple 15

106 g de pâte « kraft » au sulfate préhydrolysée, de degré de polymérisation 500, à 6 % d'humidité, sont complètement séchés à l'étuve puis ils sont introduits dans 1 440 g de diméthylsulfoxyde à 550 ppm d'eau. On ajoute 125 g de paraformaldéhyde à 96 % de manière à obtenir un rapport paraformaldéhyde/cellulose de 1,20.

On chauffe ce mélange pendant 5 heures à 135 °C sous agitation ; après dissolution, on élimine une partie du paraformaldéhyde par barbotage d'un courant d'azote sec à 120 °C et on abaisse le rapport formaldéhyde/cellulose à 0,25.

La solution obtenue, de viscosité 410 poises à 20 °C est refroidie et additionnée de 1 000 g de polymère acrylique sec identique à celui utilisé dans l'exemple 1 sous forme de poudre de façon à obtenir un rapport cellulose/polymère à base d'acrylonitrile de 0,1. Le mélange est malaxé pendant 1 heure à froid, additionné de 3 545 g de diméthylsulfoxyde, malaxé pendant 1 heure à 85 °C. La solution à 18 % de polymères est extrudée à 75 °C à travers une filière de 200 trous de 0,055 mm dans un bain coagulant à 5 °C constitué d'un mélange de diméthylsulfoxyde et d'eau en proportion 55/45 ; les filaments sont extraits par un organe mécanique entraîné positivement et subissent un étirage dans l'air à un taux de 1,1 X, un lavage à contre-courant et un étirage en eau bouillante à un taux de 4 X, un ensimage et un séchage.

La vitesse finale est de 50 m/min.

Les filaments obtenus possèdent les propriétés suivantes :

| | |
|---|---|
| Titre au brin | 3,3 dtex |
| Ténacité | 23 g/tex |
| Allongement | 17 % |
| Pouvoir de rétention d'eau | 33. |

## Exemple 16

106 g de pâte au sulfate préhydrolysée, de degré de polymérisation 500, à 6 % d'humidité sont complètement séchés à l'étuve, puis sont mélangés de façon homogène dans 1 500 g de diméthylsulfoxyde contenant 500 ppm d'eau.

On ajoute 125 g de paraformaldéhyde à 96 % pour obtenir un rapport paraformaldéhyde/cellulose de 1,2. On chauffe le mélange pendant 6 heures à 135 °C ; après dissolution, le rapport paraformaldé-

7

hyde/cellulose est ramené à 0,30 par passage dans un évaporateur à couche mince sous vide à 130 °C.

Après dissolution, on ajoute à la solution de cellulose 2 000 g de polymère acrylique constitué de 91,4 % en poids d'acrylonitrile, 7,75 % de méthacrylate de méthyle et 0,85 % de méthallylsulfonate de sodium de façon à obtenir un rapport cellulose/polymère acrylique de 0,05. On malaxe pendant 1 heure à froid puis on ajoute 7 970 g de diméthylsulfoxyde et malaxe de nouveau pendant une heure à 85 °C.

La solution obtenue de concentration totale en polymères de 18 % est extrudée à 75 °C à travers une filière de 200 trous de diamètre 0,055 mm chacun dans un bain coagulant contenant du diméthylsulfoxyde et de l'eau en proportion 55/45 en volume, maintenu à 5 °C. Les filaments sortant du bain coagulant sont étirés dans l'air à un taux de 1,2, lavés à l'eau puis étirés dans l'eau bouillante à un taux de 4,1. La vitesse finale est de 60 m/min. Après lavage à l'eau, ensimage et séchage, les filaments obtenus possèdent les propriétés suivantes :

| | |
|---|---|
| Titre au brin | 3,3 dtex |
| Ténacité | 24 g/tex |
| Allongement | 16 % |
| Pouvoir de rétention d'eau | 23. |

Après dissolution de la phase polymère acrylique des filaments obtenus, la phase cellulose apparaît sous forme de fibrilles discontinues telles que le montre la fig. 1.

## Exemple 17

106 g de pâte au sulfate préhydrolysée, de degré de polymérisation 500, à 6 % d'humidité sont complètement séchés à l'étuve, puis sont mélangés de façon homogène dans 1 500 g de diméthylsulfoxyde contenant 500 ppm d'eau.

On ajoute 125 g de paraformaldéhyde à 96 % pour obtenir un rapport paraformaldéhyde/cellulose de 1,2. On chauffe le mélange pendant 6 heures à 135 °C ; après dissolution, le rapport formaldéhyde/cellulose est ramené à 0,30 par passage dans un évaporateur à couche mince sous vide à 130 °C.

Après dissolution, on ajoute à la solution de cellulose 1 000 g de polymère acrylique constitué de 91,4 % en poids d'acrylonitrile, 7,75 % de méthacrylate de méthyle et 0,85 % de méthallylsulfonate de sodium de façon à obtenir un rapport cellulose/polymère acrylique de 0,1. On malaxe pendant 1 heure à froid puis on ajoute 2 870 g de diméthylsulfoxyde et malaxe de nouveau pendant une heure à 85 °C.

La solution obtenue de concentration totale en polymères de 20 % est extrudée à 75 °C à travers une filière de 200 trous de diamètre 0,055 mm chacun dans un bain coagulant du diméthylsulfoxyde et de l'eau en proportion 55/45 en volume, maintenu à 5 °C. Les filaments sortant du bain coagulant sont étirés dans l'air à un taux de 1,3, lavés à l'eau puis étirés dans l'eau bouillante à un taux de 4,3. La vitesse finale est de 60 m/min. Après lavage à l'eau, ensimage et séchage, les filaments obtenus possèdent les propriétés suivantes :

| | |
|---|---|
| Titre au brin | 3,3 dtex |
| Ténacité | 31 g/tex |
| Allongement | 16 % |
| Pouvoir de rétention d'eau | 30. |

Après dissolution de la phase polymère acrylique des filaments obtenus, la phase cellulose apparaît sous forme d'un réseau du type de celui de la fig. 2.

## Exemple 18

106 g de pâte au sulfate préhydrolysée, de degré de polymérisation 500, à 6 % d'humidité sont complètement séchés à l'étuve, puis sont mélangés de façon homogène dans 1 200 g de diméthylsulfoxyde contenant 550 ppm d'eau.

On ajoute 125 g de paraformaldéhyde à 96 % pour obtenir un rapport paraformaldéhyde/cellulose de 1,2. On chauffe le mélange pendant 6 heures à 135 °C ; après dissolution, le rapport formaldéhyde/cellulose est ramené à 0,30 par passage dans un évaporateur à couche mince sous vide à 130 °C.

Après dissolution, on ajoute à la solution de cellulose 500 g de polymère acrylique constitué de 91,4 % en poids d'acrylonitrile, 7,75 % de méthacrylate de méthyle et 0,85 % de méthallylsulfonate de sodium de façon à obtenir un rapport cellulose/polymère acrylique de 0,2. On malaxe pendant 1 heure à froid puis on ajoute 1 175 g de diméthylsulfoxyde et malaxe de nouveau pendant une heure à 85 °C.

La solution obtenue de concentration totale en polymères de 20 % est extrudée à 75 °C à travers une filière de 200 trous de diamètre 0,055 mm chacun dans un bain coagulant contenant du diméthylsulfoxyde et de l'eau en proportion 55/45 en volume, maintenu à 5 °C. Les filaments sortant du bain coagulant sont étirés dans l'air à un taux de 1,4, lavés à l'eau puis étirés dans l'eau bouillante à un taux de 4,2. La vitesse finale est de 60 m/min. Après lavage à l'eau, ensimage et séchage, les filaments obtenus possèdent les propriétés suivantes :

| | |
|---|---|
| Titre au brin | 3,3 .dtex |
| Ténacité | 30 g/tex |
| Allongement | 15 % |
| Pouvoir de rétention d'eau | 40. |

Après dissolution de la phase polymère acrylique des filaments obtenus, la phase cellulose apparaît sous forme d'un réseau du type de celui de la fig. 3.

## Exemple 19

106 g de pâte au sulfate préhydrolysée, de degré de polymérisation 500, à 6 % d'humidité sont complètement séchés à l'étuve, puis sont mélangés de façon homogène dans 200 g de diméthylsulfoxyde contenant 500 ppm d'eau.

On ajoute 125 g de paraformaldéhyde à 96 % pour obtenir un rapport paraformaldéhyde/cellulose de 1,2. On chauffe le mélange pendant 6 heures à 135 °C ; après dissolution, le rapport paraformaldéhyde/cellulose est ramené à 0,30 par passage dans un évaporateur à couche mince sous vide à 130 °C.

Après dissolution, on ajoute à la solution de cellulose 250 g de polymère acrylique constitué de 91,4 % en poids d'acrylonitrile, 7,75 % de méthacrylate de méthyle et 0,85 % de méthallylsulfonate de sodium de façon à obtenir un rapport cellulose/polymère acrylique de 0,4. On malaxe pendant 1 heure à froid puis on ajoute 200 g de diméthylsulfoxyde et malaxe de nouveau pendant une heure à 85 °C.

La solution obtenue de concentration totale en polymères de 24 % est extrudée à 80 °C à travers une filière de 200 trous de diamètre 0,055 mm chacun dans un bain coagulant contenant du diméthylsulfoxyde et de l'eau en proportion 55/45 en volume, maintenu à 5 °C. Les filaments sortant du bain coagulant sont étirés dans l'air à un taux de 1,1, lavés à l'eau puis étirés dans l'eau bouillante à un taux de 4,05. La vitesse finale est de 60 m/min. Après lavage à l'eau, ensimage et séchage, les filaments obtenus possèdent les propriétés suivantes :

| | |
|---|---|
| Titre au brin | 3,3 dtex |
| Ténacité | 24 g/tex |
| Allongement | 15 % |
| Pouvoir de rétention d'eau | 52. |

Après dissolution de la phase polymère acrylique des filaments obtenus, la phase cellulose apparaît sous forme d'un réseau tridimensionnel continu du type de celui de la fig. 4.

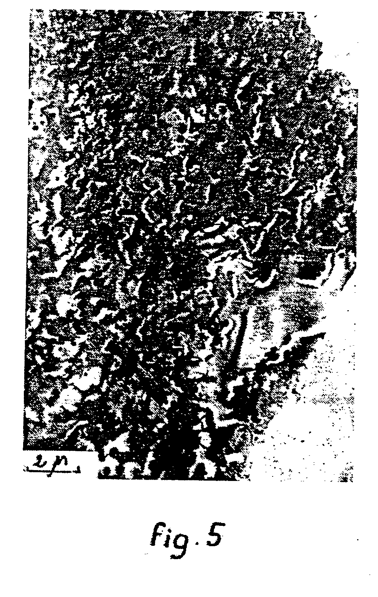

La vue en coupe (fig. 5) laisse apparaître les deux réseaux, le plus clair étant celui de la phase cellulose.

## Revendications

1. Nouvelles solutions conformables, caractérisées par le fait qu'elles sont constituées de
— cellulose de degré de polymérisation au moins 200
— polymère à base d'acrylonitrile
— diméthylsulfoxyde
— formaldéhyde
le rapport pondéral cellulose/polymère acrylique étant compris entre 0,05 et 1, le rapport pondéral formaldéhyde/cellulose entre 0,2 et 2 et la concentration totale de la solution en polymères étant comprise entre 12 et 30 % en poids.

2. Solutions selon la revendication 1, caractérisées par le fait que le polymère acrylique contient au moins 50 % et de préférence au moins 85 % en poids d'acrylonitrile et 0 à 50 % et de préférence 0 à 15 % d'au moins un comonomère éthylénique copolymérisable avec l'acrylonitrile.

3. Solutions selon la revendication 1, caractérisées par le fait que la concentration totale en polymères est comprise entre 18 et 26 %.

4. Solutions selon la revendication 1, caractérisées par le fait que la teneur en eau est inférieure à 5 000 ppm.

5. Solutions selon la revendication 1, caractérisées par le fait que le rapport cellulose/polymère acrylique est compris entre 0,1 et 1.

6. Procédé pour l'obtention de solutions conformables selon la revendication 1, caractérisé par le fait que l'on ajoute le polymère acrylique à une solution, dans un mélange de diméthylsulfoxyde et formaldéhyde, de cellulose de degré de polymérisation au moins 200, préalablement séchée, avec un rapport pondéral cellulose/polymère acrylique compris entre 0,05 et 1.

7. Procédé selon la revendication 6, caractérisé par le fait que le polymère acrylique est sous forme de poudre.

8. Procédé selon l'une des revendications 6 et 7, caractérisé par le fait que la solution de cellulose est sous forme de poudre cristallisée par refroidissement à une température inférieure à 17 °C et que le mélange des poudres est effectué puis porté à une température comprise entre 90 et 150 °C.

9. Procédé selon la revendication 6, caractérisé par le fait que le polymère acryl⸱ ⸱e est sous forme de solution dans du diméthylsulfoxyde et aue l'on mélange les deux solutions en qu  tités telles que la concentration totale en polymères dans l⸱  olution finale soit comprise entre 12 et ⸱8 %.

10. Fibres, filaments, fils, à base de ce⸱ ⸱lose et de polymère acrylique, caractérisés par le fait que le rapport pondéral cellulose/polymère acrylique est compris entre 0,05 et 1, que chaque polymère se présente sous forme de fibrilles sensiblement orientées suivant l'axe de la fibre et entrecroisées étroitement, que les macromolécules de cellulose sont partiellement engagées dans un réseau cristallin tridimensionnel caractéristique de la cellulose II et que les fibrilles du constituant acrylique forment un réseau tridimensionnel continu.

11. Fibres, filaments, fils à base de cellulose et polymère acrylique, caractérisés par le fait que le rapport pondéral cellulose/polymère acrylique est compris entre 0,1 et 1, que chaque constituant se présente sous la forme d'un réseau tridimensionnel continu dont les fibrilles sensiblement orientées suivant l'axe de la fibre sont étroitement entrecroisées et que les macromolécules de cellulose sont partiellement engagées dans un réseau cristallin tridimensionnel caractéristique de la cellulose II.

12. Fils et fibres selon la revendication 10, caractérisés par le fait qu'ils présentent un pouvoir de rétention d'eau déterminé selon la norme DIN 53-814 d'au moins 20.

13. Fils et fibres selon la revendication 11, caractérisés par le fait que leur pouvoir de rétention d'eau est d'au moins 30.

14. Procédé pour l'obtention de fils et fibres selon la revendication 10, caractérisé par le fait que l'on file une solution constituée de cellulose de degré de polymérisation au moins 200, d'un polymère à base d'acrylonitrile, de diméthylsulfoxyde et de formaldéhyde, le rapport pondéral cellulose/polymère acrylique étant compris entre 0,05 et 1, le rapport pondéral formaldéhyde/cellulose entre 0,2 et 2 et la concentration totale en polymères entre 12 et 30 % en poids, dans un bain coagulant constitué de 25 à 80 % en volume d'eau et de 75 à 20 % en volume de diméthylsulfoxyde, ledit bain étant maintenu entre 0 et 40 °C, que l'on oriente ensuite les filaments et qu'on les débarrasse de leur solvant.

15. Procédé selon la revendication 14, caractérisé par le fait que la solution a une concentration totale en polymère comprise entre 18 et 26 %.

16. Procédé selon la revendication 14, caractérisé par le fait que l'on oriente les filaments par étirage.

17. Procédé selon la revendication 14, caractérisé par le fait qu'on lave les filaments à l'eau.

18. Procédé selon la revendication 14, caractérisé par le fait qu'on lave les filaments au moyen d'une solution aqueuse d'ammoniaque diluée.

## Claims

1. New solutions which can be shaped, characterised in that they consist of cellulose having a degree of polymerisation of at least 200, an acrylonitrile-based polymer, dimethylsulphoxide and formaldehyde, the weight ratio cellulose/acrylic polymer being between 0.05 and 1, the weight ratio formaldehyde/cellulose being between 0.2 and 2 and the total polymer concentration in the solution being between 12 and 30 % by weight.

2. Solutions according to Claim 1, characterised in that the acrylic polymer contains at least 50 %, preferably at least 85 %, by weight of acrylonitrile and 0 to 50 %, preferably 0 to 15 %, of at least one ethylenic comonomer which can be copolymerised with acrylonitrile.

3. Solutions according to Claim 1, characterised in that the total polymer concentration is between 18 and 26 %.

4. Solutions according to Claim 1, characterised in that the water content is less than 5.000 ppm.

5. Solutions according to Claim 1, characterised in that the ratio cellulose/acrylic polymer is between 0.1 and 1.

6. Process for the preparation of solutions which can be shaped, according to Claim 1, characterised in that the acrylic polymer is added to a solution, in a mixture of dimethylsulphoxide and formaldehyde, of cellulose having a degree of polymerisation of at least 200 and dried beforehand, the weight ratio cellulose/acrylic polymer being between 0.05 and 1.

7. Process according to claim 6, characterised in that the acrylic polymer is in powder form.

8. Process according to one of Claims 6 and 7, characterised in that the cellulose solution is in the form of a powder crystallised by cooling to a temperature below 17 °C, and in that the powders are mixed and then heated to a temperature between 90 and 150 °C.

9. Process according to Claim 6, characterised in that the acrylic polymer is in the form of a solution in dimethylsulphoxide and in that the two solutions are mixed in amounts which are such that the total polymer concentration in the final solution is between 12 and 18 %.

10. Fibres, filaments and yarns based on cellulose and an acrylic polymer, characterised in that the weight ratio cellulose/acrylic polymer is between 0.05 and 1, in that each polymer is in the form of fibrils orientated approximately along the axis of the fibre and closely interwoven, in that the cellulose macromolecules are partially involved in a three-dimensional crystal lattice characteristic of cellulose II, and in that the fibrils of the acrylic constituent form a continuous three-dimensional system.

11. Fibres, filaments and yarns based on cellulose and acrylic polymer, characterised in that the weight ratio cellulose/acrylic polymer is between 0.1 and 1, in that each constituent is in the form of a continuous three-dimensional system of which the fibrils, which are orientated approximately along the axis of the fibre, are closely interwoven, and in that the cellulose macromolecules are partially involved in a three-dimensional crystal lattice characteristic of cellulose II.

12. Yarns and fibres according to Claim 10, characterised in that they possess a water retention capacity of at least 20, as determined in accordance with DIN Standard Specification 53-814.

13. Yarns and fibres according to Claim 11, characterised in that their water retention capacity is at least 30.

14. Process for the production of yarns and fibres according to claim 10, characterised in that a solution consisting of cellulose having a degree of polymerisation of at least 200, an acrylonitrile-based polymer, dimethylsulphoxide and formaldehyde, the weight ratio cellulose/acrylic polymer being between 0.05 and 1, the weight ratio formaldehyde/cellulose being between 0.2 and 2 and the total polymer concentration being between 12 and 30 % by weight, is extruded into a coagulating bath consisting of 25 to 80 % by volume of water and 75 to 20 % by volume of dimethylsulphoxide, the said bath being kept at between 0 and 40 °C, in that the filaments are then orientated and in that they are freed of their solvent.

15. Process according to Claim 14, characterised in that the solution has a total polymer concentration of between 18 and 26 %.

16. Process according to Claim 14, characterised in that the filaments are orientated by drawing.

17. Process according to Claim 14, characterised in that the filaments are washed with water.

18. Process according to Claim 14, characterised in that the filaments are washed with a dilute aqueous ammonia solution.

**Ansprüche**

1. Neue formbare Lösungen, dadurch gekennzeichnet, daß sie bestehen aus
— Cellulose von einem Polymerisationsgrad von mindestens 200
— Polymerem auf Basis von Acrylnitril
— Dimethylsulfoxid
— Formaldehyd,
wobei das Gewichtsverhältnis Cellulose/Acrylpolymeres zwischen 0,05 und 1 liegt, das Gewichtsverhältnis Formaldehyd/Cellulose zwischen 0,2 und 2 liegt und die Gesamtkonzentration der Lösung an Polymeren zwischen 12 und 30 Gewichts-% beträgt.

2. Lösungen gemäß Anspruch 1, dadurch gekennzeichnet, daß das Acrylpolymere mindestens 50 % und vorzugsweise mindestens 85 Gewichts-% Acrylnitril und 0 bis 50 % und vorzugsweise 0 bis 15 % wenigstens eines äthylenischen Comonomeren, das mit dem Acrylnitril copolymerisierbar ist, enthält.

3. Lösungen gemäß Anspruch 1, dadurch gekennzeichnet, daß die Gesamtkonzentration an Polymeren zwischen 18 und 26 % beträgt.

4. Lösungen gemäß Anspruch 1, dadurch gekennzeichnet, daß der Gehalt an Wasser unterhalb von 5 000 ppm liegt.

5. Lösungen gemäß Anspruch 1, dadurch gekennzeichnet, daß das Verhältnis Cellulose/Acrylpolymeres zwischen 0,1 und 1 beträgt.

6. Verfahren zur Erzielung von formbaren Lösungen gemäß Anspruch 1, dadurch gekennzeichnet, daß man das Acrylpolymere zu einer Lösung von vorher getrockneter cellulose, eines Polymerisationsgrades von Wenigstens 200, in einem Gemisch aus Dimethylsulfoxid und Formaldehyd gibt, mit einem Gewichtsverhältnis Cellulose/acrylpolymeres zwischen 0,05 und 1.

7. Verfahren gemäß Anspruch 6, dadurch gekennzeichnet, daß das Acrylpolymere in Pulverform ist.

8. Verfahren gemäß einem der Ansprüche 6 und 7, dadurch gekennzeichnet, daß die Celluloselösung in Form eines Pulvers ist, die durch Abkühlen auf eine Temperatur unterhalb 17 °C kristallisiert ist, und daß die Mischung der Pulver bewirkt wird und dann auf eine Temperatur zwischen 90 und 150 °C gebracht wird.

9. Verfahren gemäß Anspruch 6, dadurch gekennzeichnet, daß das Acrylpolymere in Form der Lösung in Dimethylsulfoxid vorliegt und daß man die beiden Lösungen in derartigen Mengen vermischt, daß die Gesamtkonzentration an Polymeren in der Endlösung zwischen 12 und 18 % beträgt.

10. Fasern, Filamente bzw. Einzelfäden, Fäden auf Basis von Cellulose und Acrylpolymeren, dadurch gekennzeichnet, daß das Gewichtsverhältnis Cellulose/Acrylpolymeres zwischen 0,05 und 1 beträgt, daß jedes Polymere in Form von Fibrillen vorliegt, die im wesentlichen entlang der Achse der Faser orientiert und eng untereinander verschlungen sind, daß die Cellulose-Makromoleküle teilweise eingefügt sind in ein dreidimensionales Kristallgitter, das für Cellulose II charakteristisch ist, und daß die Fibrillen des Acrylbestandteils ein kontinuierliches dreidimensionales Gitter bilden.

11. Fasern, Filamente, Einzelfäden, Fäden auf Basis von Cellulose und Acrylpolymerem, dadurch gekennzeichnet, daß das Gewichtsverhältnis Cellulose/Acrylpolymeres zwischen 0,1 und 1 beträgt, daß jeder Bestandteil in Form eines kontinuierlichen dreidimensionalen Gitters vorliegt, dessen Fibrillen, die im wesentlichen entlang der Achse der Faser orientiert sind, eng untereinander verschlungen sind und

daß die Cellulose-Makromoleküle teilweise in ein dreidimensionales Kristallgitter, das für Cellulose II charakteristisch ist, eingefügt sind.

12. Fäden und Fasern gemäß Anspruch 10, dadurch gekennzeichnet, daß sie ein Wasser-Rückhaltevermögen, bestimmt nach der Norm DIN 53-814, von wenigstens 20 aufweisen.

13. Fäden und Fasern gemäß Anspruch 11, dadurch gekennzeichnet, daß ihr Wasser-Rückhaltevermögen wenigstens 30 beträgt.

14. Verfahren zur Erzielung von Fäden und Fasern gemäß Anspruch 10, dadurch gekennzeichnet, daß man eine Lösung verspinnt, die aus Cellulose vom Polymerisationsgrad wenigstens 200, einem Polymeren auf Basis von Acrylnitril, Dimethylsulfoxid und Formaldehyd besteht, wobei das Gewichtsverhältnis Cellulose/Acrylpolymeres zwischen 0,05 und 1 beträgt, das Gewichtsverhältnis Formaldehyd/Cellulose zwischen 0,2 und 2 und die Gesamtkonzentration an Polymeren zwischen 12 und 30 Gewichts-% beträgt, in ein Fällbad, das aus 25 bis 80 Volumen-% Wasser und 75-20 Volumen-% Dimethylsulfoxid besteht, wobei dieses Bad zwischen 0 und 4 °C gehalten wird, daß man dann die Filamente orientiert und daß man sie von ihrem Lösungsmittel befreit.

15. Verfahren gemäß Anspruch 14, dadurch gekennzeichnet, daß die Lösung eine Gesamtkonzentration an Polymerem zwischen 18 und 26 % hat.

16. Verfahren gemäß Anspruch 14, dadurch gekennzeichnet, daß man die Filamente durch Verstrecken orientiert.

17. Verfahren gemäß Anspruch 14, dadurch gekennzeichnet, daß man die Filamente mit Wasser wäscht.

18. Verfahren gemäß Anspruch 14, dadurch gekennzeichnet, daß man die Filamente mittels einer verdünnten wäßrigen Ammoniaklösung wäscht.

Fig. 1

Fig. 2

fig. 3

fig. 4

fig. 5